# EUROPEAN PATENT APPLICATION

(11) **EP 1 830 038 A1**
(43) Date of publication of application: **05.09.2007**
(21) Application number: 06425134.1
(22) Date of filing: 01.03.2006
(51) Int. Cl.: F01K 3/00, F01K 17/02, F01K 17/04

(54) **Cogeneration plant and method**

(71) Applicant: Fuduli, Francesco, 80125 Napoli (IT)
(72) Inventor: Fuduli, Francesco, 80125 Napoli (IT)
(74) Representative: Papa, Elisabetta

(57) **Abstract**

A cogeneration plant (1) suitable for the combined production of electric energy and thermal energy and a method therefor, said plant comprising: a pellet burner (3); a diathermic oil boiler (2) operatively connected to the burner (3) for the heating of the diathermic oil by a combustion prechamber (32); an oil / water evaporator (4) arranged downstream of said boiler (2) and operatively connected thereto; a steam engine (5) fed by the evaporator (4) and suitable for producing electric energy; and a heat exchanger (6) suitable for supplying hot water to a use, arranged downstream of an engine (5) and operatively connected thereto (Figure 1).

## Description

The present invention relates to a cogeneration plant and method, and in particular to a plant and a method for the combined production of electric energy and thermal energy.

Various types of cogeneration plants are known, commonly employing a turbine fed with vapours of silicone oil, or another synthetic oil, as electrical generator, associated with a boiler-evaporator assembly. Moreover, over the last few years biomass boilers have taken hold, mainly owing to the low environmental impact of the fuel used.

However, such known plants entail several relevant drawbacks, above all at medium-low powers. In fact, first of all said turbines have an electrical efficiency generally not exceeding 19%. Moreover, said turbines entail remarkable environmental risks, as synthetic oil vapours are highly harmful; in practice, this thwarts the reason underlying the choice of a biomass plant. On the other hand, in such plants the use of common steam turbines is not viable, as at low pressure regimens the unavoidable vapour moisture quickly corrodes the vanes of the turbine and limits its efficiency. In addition, in this latter turbines efficiency falls swiftly at the slightest pressure drop.

Moreover, the known plants are extremely bulky and remarkably expensive, even for medium-low powers.

Hence, the technical problem underlying the present invention is to provide a cogeneration plant and method overcoming the drawbacks mentioned hereto with reference to the known art.

Such a problem is solved by a plant according to claim 1 and a method according to claim 10.

The present invention provides several relevant advantages. The main advantage lies in that it allows anyhow high efficiencies even at medium-low powers without pollution problems.

Other advantages, features and the modes of employ of the present invention will be made apparent in the following detailed description of some embodiments thereof, given by way of a non-limiting example. Reference will be made to the figures of the annexed drawings, wherein:
- Figure 1 shows a diagram of a first embodiment of a cogeneration plant according to the invention; and
- Figure 2 shows a diagram of a second embodiment of a cogeneration plant according to the invention.

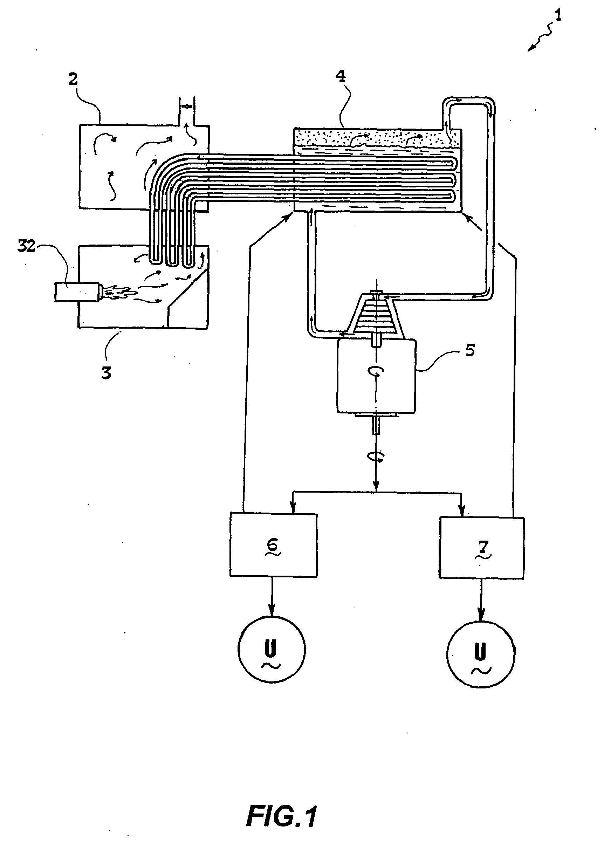

Referring to Figure 1, a cogeneration plant for the combined production of electric energy and thermal energy according to a first embodiment of the invention is generally indicated by 1. The plant 1 is mainly devised for medium-low powers, comprised in a range of 100 -600 kWe.

The plant 1 mainly comprises the following components, arranged in series in the production cycle of the plant itself: a boiler 2, using diathermic oil as thermal carrier fluid; a pellet burner 3 associated with the boiler 2; an oil/water evaporator 4; a steam engine 5; and a heat exchanger 6.

Hereinafter, each of said components will be described in greater detail.

The diathermic oil boiler 2 may be of a coil type, as shown purely by way of example in Figure 1. The boiler 2 is fed by the pellet burner 3 arranged externally thereto, and in particular in a combustion prechamber 32. The use of such a prechamber 32 allows using a conventional boiler 2, and therefore it is used the same kind of boiler that, with fossil fuels, works by pressurized internal combustion.

In particular, to the combustion prechamber 32 associated with the pellet burner 3 it is applied a coil carrying diathermic oil therein; said coil is a continuation of the coil of the boiler 2, the combustion gases circulate among the coil turns of the prechamber (and therefore of the boiler) and heat the thermal carrier fluid. Oil thus heated is pumped in a closed circuit in the accumulation evaporator 4. For medium-low powers, the thermal carrier fluid is preferably heated to about 310 °C.

The overall arrangement is such that the pellet burner 3 may, if need be, quickly and safely be replaced by a traditional-fuel burner, and this, for example, should the primary fuel - for any reason - cease.

Moreover, the combining of a traditional coil boiler with a pellet burner yields a device generally very compact, versatile and of reasonable cost, concomitantly allowing an improved thermal efficiency with respect to conventional biomass boilers.

The oil / water evaporator 4 is preferably of a type suitable for allowing the production of saturated steam at a pressure equal to or higher than about 28 bar, and it may be of the type based on a oil / preheated water pipe bundle exchanger. In a preferred embodiment, the evaporator 4 has the following main technical parameters:

| | |
|---|---|
| oil nominal temperature | about 300 - 310 °C |
| saturated steam production | kg/h, proportional to burner power. |
| feedwater temperature | ≥ 80 °C |
| boiling pressure | about 30 bar |
| operating pressure | 28 bar |

The steam engine 5 allows producing electric energy with an electrical efficiency higher than 25%.

The use of this type of engine frees from any risk of pollution that may derive from losses, vents or ruptures, just since it uses mere steam. Moreover, such an engine assures higher efficiencies in terms of produced energy with respect to a turbine, and in it any momentary drop in steam pressure or temperature is almost irrelevant, thereby proving more reliable. Moreover, machine wear becomes significant only after decades of work.

In a preferred embodiment, the engine 5 has the following main technical parameters:

| | |
|---|---|
| inlet steam pressure | 28 bar |
| outlet steam pressure | 0.5 bar |
| steam quantity | kg/h proportional to burner power. |
| Efficiency at the axis | kWe, proportionally. |
| Efficiency at the terminals | kWe, proportionally. |

The residual thermal energy of the process fluid is then used to supply thermal energy to a use U.

For this purpose, the plant 1 comprises the heat exchanger 6, which is of a steam/water type and just suitable for producing hot water for household or industrial uses U by exploiting the residual thermal energy of the process fluid outlet from the engine 5.

For medium-low powers of the plant 1, the exchanger 6 is suitable for supplying to heat uses water at a temperature comprised in a range of about 80 - 105 °C.

In addition, to generate refrigeration units the engine 5 may be operatively connected to an absorption machine 7, inserted in association to or instead of the exchanger 6.

For medium-low powers of the plant 1, said absorption machine 7 is suitable for supplying to cold uses water at a temperature comprised in a range of about 5 - 105 °C.

Variant embodiments could provide cogeneration means differing from the abovementioned evaporator and absorption machine.

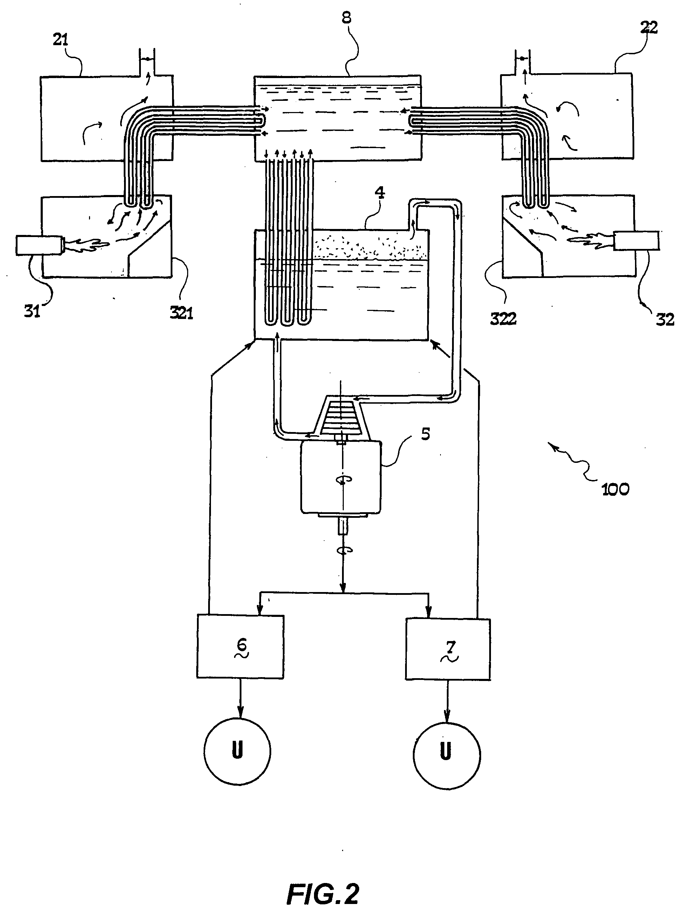

Figure 2 shows a diagram of a second embodiment of the plant of the invention, that will hereinafter be described solely with reference to the aspects differentiating it from the first embodiment illustrated hereto.

Such a second embodiment is devised to multiply the powers. In particular, in such a case the plant, denoted by 100, comprises a pair of burners, 21 and 22, respectively, as the ones described above, associated with respective pellet burners 31 and 32 and with related combustion prechambers 321 and 322, them also as already described above.. The boilers 21 and 22 (and associated components) work in parallel and are operatively connected to a common accumulation tank 8 into which the thermal carrier fluid (diathermic oil also in the present embodiment) converges. Moreover, said tank 8 is operatively connected to the evaporator, in this case as well denoted by 4, and the remainder of the plant is similar to what already described in connection with the first embodiment.

With the described configuration, powers even beyond 800 kW may be attained.

Variant embodiments could provide, in the accumulation tank and also as thermal carrier fluid in the boiler(s), the use of saline solutions instead of diathermic oil, as these are more suitable for particularly high temperatures, in particular of up to about 550 °C. Such a variant allows to considerably increase the pressure and the temperature of the steam, and therefore the electrical efficiency of the steam engine.

Moreover, further variants could provide the presence of plural pellet burners of alike or different power associated with one or each boiler, and this for power requirements of the plant.

It will be understood that the invention relates also to a cogeneration method suitable for the combined production of electric energy and thermal energy, providing the following main steps:
(a) the pellet combustion, carried out by one or more burners, as already described in connection to the plant of the invention;
(b) the heating, by said combustion, of a thermal carrier fluid, in particular diathermic oil or saline solution, always as already described above;
(c) the evaporation of a process fluid, in particular water, by the heat associated with said thermal carrier fluid;
(d) the production of electric energy by a steam engine (5) fed by said process fluid; and
(e) the use of the residual thermal energy of said process fluid for supplying thermal energy to a use.

The preferred features of the method of the invention have already been illustrated with reference to the plant of the invention and therefore will not be repeated.

The present invention has hereto been described with reference to preferred embodiments thereof. It is understood that there could be other embodiments referable to the same inventive kernel, all falling within the protective scope of the claims hereinafter.

## Claims

1. A cogeneration plant (1; 100) apt to the combined production of electric energy and thermal energy, comprising:
- a pellet burner (3);
- a thermal carrier fluid boiler (2) operatively connected to said burner (3) for the heating of said fluid;
- a thermal carrier fluid / process fluid evaporator (4) arranged downstream of said boiler (2) and operatively connected thereto;
- a steam engine (5) fed by said evaporator (4) and apt to the production of electric energy; and
- cogeneration means (6; 7) apt to supply thermal energy to a use, arranged downstream of said engine (5) and operatively connected thereto to exploit the residual thermal energy of said process fluid.

2. The plant (1; 100) according to claim 1, comprising a combustion prechamber (32) associated with said burner (3).

3. The plant (1; 100) according to claim 1 or 2, wherein said thermal carrier fluid is a diathermic oil.

4. The plant (1; 100) according to claim 1 or 2, wherein said thermal carrier fluid is a saline solution.

5. The plant (1; 100) according to any one of the preceding claims, wherein said process fluid is water.

6. The plant (1; 100) according to any one of the preceding claims, wherein said cogeneration means comprises a heat exchanger (6) apt to supply hot water to a use.

7. The plant (1; 100) according to any one of the preceding claims, wherein said cogeneration means comprises an absorption machine (7) suitable for supplying cold water to a use.

8. The plant (100) according to any one of the preceding claims, comprising a plurality of boilers (21, 22) operating in parallel.

9. The plant (100) according to any one of the preceding claims, comprising an accumulation tank (8) of thermal carrier fluid interposed between said boiler or boilers (2) and said evaporator (4).

10. The plant (1; 100) according to any one of the preceding claims, comprising a plurality of pellet burners (3; 31, 32) operatively connected to said or each boiler (2; 21,22).

11. A cogeneration method apt to the combined production of electric energy and thermal energy, providing:
(a) the pellet combustion, carried out by a related burner (3);
(b) the heating, by said combustion, of a thermal carrier fluid;
(c) the evaporation of a process fluid by means of the heat associated with said thermal carrier fluid;
(d) the production of electric energy by means of a steam engine (5) fed by said process fluid; and
(e) the use of the residual thermal energy of said process fluid for supplying thermal energy to a use.

12. The method according to claim 11, wherein said step (a) is carried out by a combustion prechamber (32) associated with said burner (3).

13. The method according to claim 11 or 12, wherein said step (b) is carried out by a boiler (2) operatively connected to said burner (3).

14. The method according to any one of the claims 11 to 13, wherein said thermal carrier fluid is a diathermic oil.

15. The method according to any one of the claims 11 to 13, wherein said thermal carrier fluid is a saline solution.

16. The method according to any one of the claims 11 to 15, wherein said process fluid is water.

17. The method according to any one of the claims 11 to 16, wherein said step (e) is carried out by a heat exchanger (6) apt to supply hot water to a use.

18. The method according to any one of the claims 11 to 17, wherein said step (e) is carried out by an absorption machine (7) apt to supply cold water to a use.

19. The method according to any one of the claims 11 to 18, wherein said step (a) is carried out by a plurality of burners (31, 32) operating in parallel.

20. The method according to any one of the claims 11 to 19, providing a step of accumulation of thermal carrier fluid upstream of said evaporation step.
